# EUROPEAN PATENT APPLICATION

(11) **EP 1 475 695 A2**
(43) Date of publication of application: **10.11.2004**
(21) Application number: 04252499.1
(22) Date of filing: 29.04.2004
(51) Int. Cl.: G06F 3/12

(54) **Image printing system controlled by portable terminal**

(30) Priority: 07.05.2003 JP 2003128544
(71) Applicant: Fuji Photo Film Co., Ltd., Kanagawa 250-0123 (JP)
(72) Inventor: Ito, Atsushi, Minato-ku Tokyo 106-8620 (JP)
(74) Representative: Stevens, Jason Paul

(57) **Abstract**

A user visits a shop where a printing device is installed with his or her cellular phone set. The device ID (telephone number) of the cellular phone set is transmitted from the cellular phone set to the printing device by short-distance communication. The printing device transmits the device ID to the center server. The center server transmits to the printing device access information stored in correspondence with the device ID. The printing device accesses an image data server owned by the user on the basis of the access information. Image data selected by the user is transmitted from the image data server to the printing device, and is printed in the printing device.

## Description

### BACKGROUND OF THE INVENTION

### Field of the Invention

The present invention relates to a printing system, a printing device included in the printing system, and a method for controlling the same.

### Description of the Background Art

When an image represented by image data picked up using a digital camera is printed, there is a method of taking media having the image data recorded thereon to a shop, to print the image using a printer provided in the shop. A method of a user proposed uploading image data representing an image to be printed onto a server, downloading the uploaded image data using a laboratory terminal in a shop which can be connected to the server, and printing the image on the basis of the downloaded image data is also proposed (e.g., JP-A-2002-290703).

In the method of taking the media to the shop, the user must visit the shop twice, i.e., in taking the media to the shop and in picking up prints of the image based on the image data recorded on the media. In the method using the server, it takes time and labor to upload the image data onto the server. Further, in a case where the image data is uploaded, the user must generally pick up the prints of the image based on the image data from the shop within a predetermined period. In either case, the user who desires to make prints cannot easily obtain the prints.

### SUMMARY OF THE INVENTION

An object of the present invention is to provide a printing system capable of easily obtaining prints of an image.

A printing system according to the present invention comprises an image data server, owned by a user, comprising an image data storage device (means) for storing image data, a center server comprising an access information storage device (means) for storing access information to the image data server, a printing device capable of communicating with the image data server and the center server, and a portable terminal, owned by the user, capable of communicating with the printing device and the center server. The access information storage device (means) in the center server stores the access information to the image data server in correspondence with a portable terminal ID for identifying the portable terminal. The center server comprises an access information transmission device (means) for reading out the access information to the image data server corresponding to the given portable terminal ID from the access information storage device (means), and transmitting the read access information to the printing device.

The printing device comprises a device (means) for accessing the image data server on the basis of the access information transmitted from the access information transmission device (means) in the center server, and transmitting to the image data server a request to download the image data stored in the image data storage device (means) in the image data server.

The image data server comprises an image data transmission device (means) for reading out the image data from the image data storage device (means) on the basis of the download request transmitted from the download request transmission device (means) in the printing device, and transmitting the read image data to the printing device. The printing device further comprises a printer for printing an image represented by the image data transmitted from the image data transmission device (means) in the image data server.

The present invention also provides a printing device used for the printing system. The printing device can be connected to each of an image data server, owned by a user, comprising an image data storage device (means) for storing image data, a portable terminal, owned by the user, comprising a storage device (means) for storing portable terminal ID for identifying the portable terminal, and a center server comprising an access information storage device (means) for storing access information to the image data server and the portable terminal ID in correspondence with each other, and is characterized by comprising an access information receiving device (means) for receiving the access information, corresponding to the portable terminal ID stored in the storage device in the portable terminal, transmitted from the center server; a download request transmission device (means) for accessing the image data server on the basis of the access information received by the access information receiving device (means) and transmitting to the image data server a request to download the image data stored in the image data storage device (means) in the image data server; and a printer for printing an image represented by the image data transmitted from the image data server on the basis of the download request.

According to the present invention, the center server stores the access information to the image data server and the portable terminal ID in correspondence with each other. The portable terminal ID is given to the center server.

In one mode, the printing device comprises a short-distance receiving device (means) for receiving the portable terminal ID transmitted from the portable terminal by short-distance communication, and a portable terminal ID transmission device (means) for transmitting to the center server the portable terminal ID received by the short-distance receiving device (means). The user who has the portable terminal goes to a shop where the printing device is installed, thereby making it possible to transmit the portable terminal ID from the portable terminal to the printing device by short-distance communication. In this case, the portable terminal ID is transmitted from the printing device to the center server. Of course, the portable terminal ID may be directly transmitted from the portable terminal to the center server.

The center server transmits to the printing device the access information corresponding to the given portable terminal ID. The access information may be fed to the printing device by transmitting the access information from the center server to the portable terminal and transmitting the access information from the portable terminal to the printing device.

In either case, the printing device receives the access information stored in the center server, and accesses the image data server on the basis of the received access information. The request to download the image data is transmitted to the image data server.

The image data server owned by the user transmits the image data to the printing device on the basis of the download request transmitted from the printing device. In the printing device, the image represented by the image data is printed by the printer provided in the printing device.

According to the present invention, if the image data is thus stored in the image data server owned by the user, the user can print the image represented by the image data stored in the image data server only by going to the shop where the printing device is installed with the portable terminal. According to the present invention, peer-to-peer communication is realized between the printing device and the image data server owned by the user. The user need not previously upload the image data in order to obtain prints of the image.

In one mode, the access information transmitted from the center server to the portable terminal is bar-coded access information. The printing device further comprises a bar code reading device (means) for reading the bar-coded access information. The printing device is caused to read the bar code transmitted to the portable terminal, so that the access information to the image data server owned by the user is obtained by the printing device. It is possible to establish peer-to-peer communication in the printing device and the image data server owned by the user on the basis of the obtained access information.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the overall configuration of a printing system;
Fig. 2 is a block diagram showing the electrical configuration of a cellular phone set;
Fig. 3 is a block diagram showing the electrical configuration of a printing device;
Fig. 4 illustrates the contents of a center server database;
Fig. 5 is a flow chart showing registration processing;
Fig. 6 is a flow chart showing image printing processing; and
Fig. 7 is a flow chart showing another example of image printing processing.

### DESCRIPITON OF THE PREFERRED EMBOIDMENTS

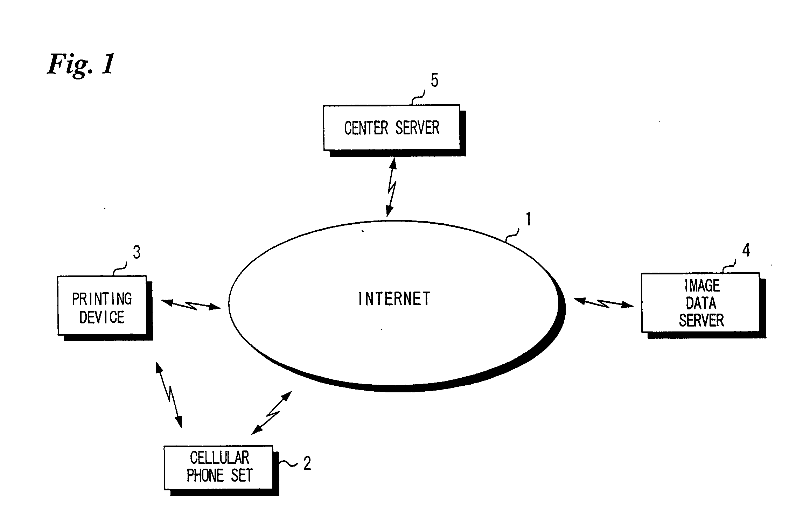

Fig. 1 is a block diagram showing the overall outline of a printing system.

The printing system comprises a cellular phone set 2, a printing device 3, an image data server 4, and a center server 5 which are connectable to the Internet 1. The cellular phone set 2, the printing device 3, the image data server 4, and the center server 5 can communicate with one another via the Internet 1. The cellular phone set 2 and the printing device 3 can establish short-distance communication with each other by infrared communication or the like. The cellular phone set 2 is carried by a user of the printing system. The printing device 3 is installed in a shop that provides image printing services. The image data server 4 is placed under the management of the user of the printing system. The center server 5 is placed under the management of an operator (an operating company) of the printing system.

In the printing system, peer-to-peer communication is established between the printing device 3 and the image data server 4, as described later. Image data is transmitted from the image data server 4 to the printing device 3 by peer-to-peer communication. An image represented by the received image data is printed in the printing device 3. The cellular phone set 2 and the center server 5 are used for realizing peer-to-peer communication between the printing device 3 and the image data server 4. The following description is based on the premise that the cellular phone set 2 and the image data server 4 are owned by the same user.

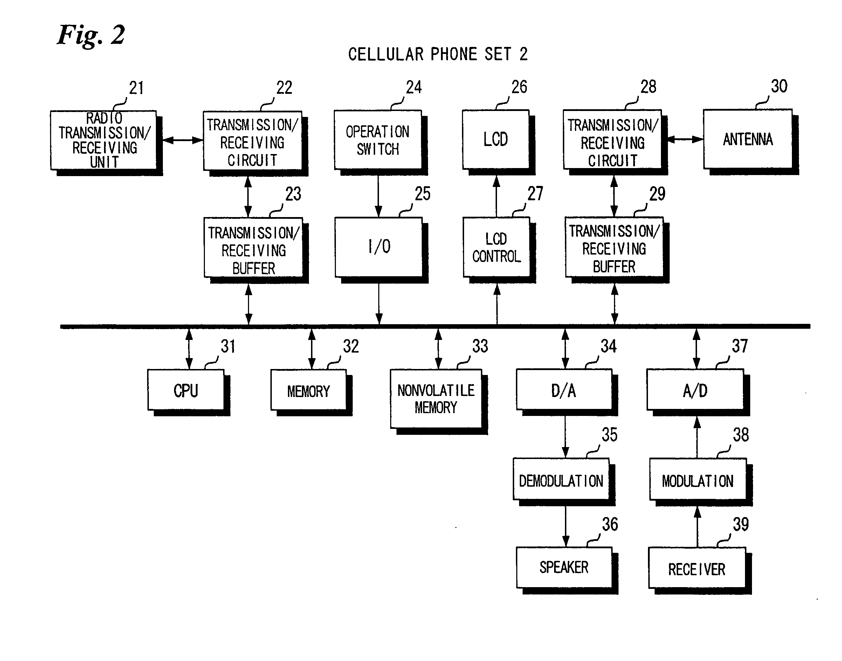

Fig. 2 is a block diagram showing the electrical configuration of the cellular phone set 2.

The overall operation of the cellular phone set 2 is controlled in a supervisory manner by a CPU 31.

The cellular phone set 2 comprises a memory 32 for temporarily storing data, and a nonvolatile memory 33 storing an operation program, the telephone number of the cellular phone set 2, and other data. Further, the cellular phone set 2 has an operation switch 24 including a ten-key pad, a determination button, etc. An operation signal from the operation switch 24 is inputted to the CPU 31 through an I/O (Input/Output) unit 25. Further, the cellular phone set 2 is provided with a liquid crystal display (LCD) 26. The liquid crystal display 26 includes a display screen. On the display screen, characters, images, etc. are displayed by a liquid crystal display control circuit (LCD control circuit) 27.

The cellular phone set 2 comprises a radio transmission/receiving unit 21. The radio transmission/receiving unit 21 makes it possible to establish short-distance communication using infrared rays, for example, between the printing device 3 and the cellular phone set 2, as described later. Data transmitted by short-distance communication from the printing device 3 to the cellular phone set 2 is received by a transmission/receiving circuit 22 through the radio transmission/receiving unit 21. The received data is temporarily stored in a transmission/receiving buffer 23. The data read out of the transmission/receiving buffer 23 is inputted to the CPU 31.

Data can be also transmitted from the cellular phone set 2 to the printing device 3 using short-distance communication. In this case, the data to be transmitted to the printing device 3 is fed to the transmission/receiving buffer 23 in the cellular phone set 2. The data read out of the transmission/receiving buffer 23 is transmitted to the printing device 3 through the radio transmission/receiving unit 21 by the transmission/receiving circuit 22.

The cellular phone set 2 can also carry out telephone conversations via a telephone line. Audio data fed from the telephone line is received by a transmission/receiving circuit 28 through an antenna 30. The received audio data is inputted to a digital-to-analog conversion circuit 34 through a transmission/receiving buffer 29. In the digital-to-analog conversion circuit 34, the audio data is converted into an analog audio signal. The analog audio signal is demodulated in a demodulation circuit 35, and the demodulated analog audio signal is fed to a speaker 36. An audio is outputted from the speaker 36.

An audio fed to a receiver (a microphone) 39 is converted into an analog audio signal in the receiver 39. The analog audio signal is modulated in a modulation circuit 38, and the modulated analog audio signal is fed to an analog-to-digital conversion circuit 37. In the analog-to-digital conversion circuit 37, the analog audio signal is converted into digital audio data. The digital audio data is fed to the transmission/receiving circuit 28 through the transmission/receiving buffer 29, and is transmitted through the antenna 30.

The cellular phone set 2 can receive data (HTML (Hypertext Markup Language) data, e-mail data, etc.) transmitted from the center server 5 or the like through the Internet 1. The data transmitted from the center server 5 is received by the transmission/receiving circuit 28 through the antenna 30, and is temporarily stored in the transmission/receiving buffer 29. If the data transmitted from the center server 5 is displaceable data, the received data is fed to the liquid crystal display control circuit 27 from the transmission/receiving buffer 29. An image represented by the received data is displayed on the liquid crystal display 26.

Data can be also transmitted from the cellular phone set 2 to the center server 5 or the like. When the URL (Uniform Resource Locator) of the center server 5 is inputted from the operation switch 24, for example, the cellular phone set 2 and the center server 5 are connected to each other such that communication can be established through the Internet 1. The data transmitted from the cellular phone set 2 is received in the center server 5.

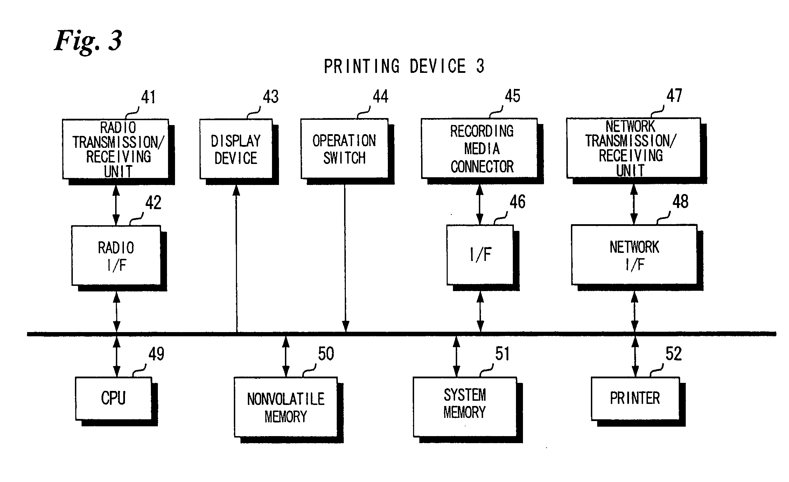

Fig. 3 is a block diagram showing the electrical configuration of the printing device 3.

The printing device 3 comprises a CPU 49. By the CPU 49, the overall operation of the printing device 3 is controlled.

The printing device 3 comprises a nonvolatile memory 50 storing a control program for controlling a printer 52 and other predetermined data, and a system memory 51 for storing a control program for the printing device 3 and other predetermined data.

The printing device 3 is provided with an operation switch 44 for issuing various types of operation commands, and a recording media connector 45 for connecting recording media (a memory card, etc.). A signal representing the command given from the operation switch 44 is fed to the CPU 49, and the printing device 3 is operated on the basis of the command signal. When the recording media is connected to the recording media connector 45, data recorded on the recording media is fed to the printing device 3 through an interface (I/F) 46.

The printing device 3 comprises a radio transmission/receiving unit 41 and a radio I/F 42. The radio transmission/receiving unit 41 and the radio I/F 42 are used, to establish short-distance communication between the printing device 3 and the cellular phone set 2.

The printing device 3 can transmit and receive data through the Internet 1. The printing device 3 comprises a network transmission/receiving unit 47 and a network I/F 48. In the present embodiment, the network transmission/receiving unit 47 and the network I/F 48 are used, as described later, to transmit and receive data between the printing device 3 and the image data server 4 and the center server 5 through the Internet 1. If the data fed to the printing device 3 through the Internet 1 is image data, the image data is fed to a display device 43 and is displayed on its display screen. An image represented by the displayed image data can be printed out from the printer 52.

The image data server 4 and the center server 5 are a computer system comprising a CPU, a communication device, a hard disk, an input device, a display device, and so on. As described above, the image data server 4 is a computer managed by the user of the printing system, and the center server 5 is a computer managed by the operator of the printing system.

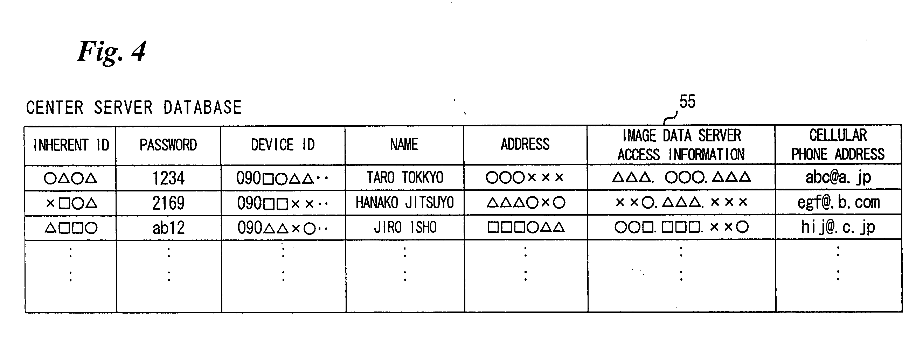

Fig. 4 illustrates the contents of a center server database 55 stored in the hard disk in the center server 5. Data in the center server database 55 are registered on the basis of registration processing, described later.

Data representing an inherent ID, a password, a device ID, a name, an address, image data server access information, and a cellular phone address are registered in the center server database 55.

"Inherent ID" is an identification code assigned for each image data server 4 (if an image data server 4 is used by a particular user, for each user). The identification code includes letters, marks, numerals, etc. The inherent ID is assigned for each image data server 4 by the center server 5.

"Device ID" is an inherent identification code for each cellular phone set 2 for specifying the cellular phone set 2. For example, data representing a telephone number inherent in the cellular phone set 2 is stored in the nonvolatile memory 33 in the cellular phone set 2. The telephone number, inherent in the cellular phone set 2, stored in the nonvolatile memory 33 in the cellular phone set 2 is used as the device ID.

"Name" is the name of a user who owns the image data server 4 specified by the inherent ID and the cellular phone set 2 specified by the device ID (a user of the printing system), and "address" is the address of the user.

"Image data server access information" includes the address (an IP (Internet Protocol) address, a port number, etc.) on the Internet 1 of the image data server 4 owned by the user, a path to a folder, containing image data or the like, provided in the image data server 4 and transmittable to the printing device 3 through the Internet 1 (hereinafter referred to as a transmittable folder), etc. The image data server access information is used, to connect the printing device 3 and the image data server 4 to each other such that communication can be established by peer-to-peer communication and to transmit the image data from the image data server 4 to the printing device 3 (the details are described later).

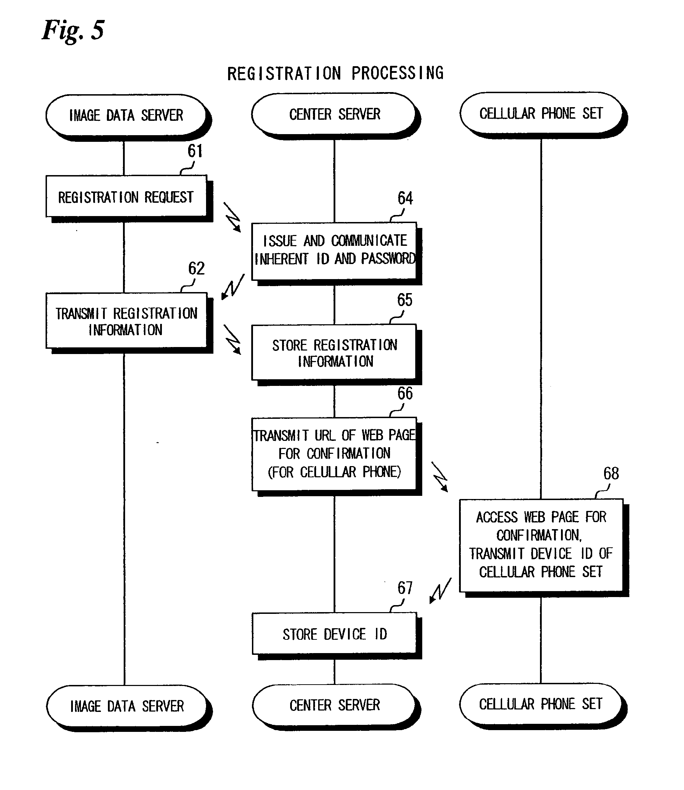

Fig. 5 is a flow chart showing registration processing for making the printing system usable, which illustrates the respective flows of the operations of the image data server 4, the center server 5, and the cellular phone set 2.

First, a new user accesses the center server 5 using the image data server 4. For example, the new user starts a browser using the image data server 4, to enter the URL of the center server 5. Consequently, data for registration processing (e.g., HTML data) is transmitted from the center server 5 to the image data server 4. A registration processing screen is displayed on the display screen of the display device in the image data server 4. The new user enters a registration request using the registration processing screen. The entered registration request is transmitted 5 from the image data server 4 to the center server (step 61).

The center server 5 issues, when it receives the registration request from the image data server 4, an inherent ID and a password to the image data server 4 which has transmitted the registration request, and allocates the issued inherent ID and password to the image data server 4 (step 64). The issued inherent ID and password are stored in the center server database 55 (see Fig. 4) in the center server 5, and are transmitted to the image data server 4. The image data server 4 stores the received inherent ID and password in its hard disk. A communication program for peer-to-peer communication may be transmitted from the center server 5 to the image data server 4, as required.

Furthermore, data for new user information registration processing is transmitted from the center server 5 to the image data server 4. A new user information registration screen is displayed on the display screen of the display device in the image data server 4. The new user uses the new user information registration screen, to enter user registration information, required by the center server 5, for example, his or her own name and address, the IP address of the image data server 4, a port number, a path to a transmittable folder, and the e-mail address of the cellular phone set 2. The entered user registration information are transmitted to the center server 5 (step 62). The center server 5 stores the received user registration information in the center server database 55 (step 65: see Fig. 4).

When the user registration information are stored in the center server database 55, the center server 5 automatically produces Web page data for confirmation on the basis of the user registration information newly stored in the center server database 55. The image data server 4 uses the registered mail address of the cellular phone set 2, to transmit to the cellular phone set 2 e-mail including a URL for accessing the center server 5 from the cellular phone set 2 (a URL inherent in the newly registered user), a predetermined message (e.g., "registration has been accepted"), etc. (step 66).

When the e-mail is received in the cellular phone set 2 owned by the newly registered user, the URL transmitted from the center server 5 is displayed on its display screen. When a portion where the URL is displayed is clicked, the cellular phone set 2 and the center server 5 are connected to each other. As described above, the URL included in the e-mail transmitted from the center server 5 to the cellular phone set 2 is the URL inherent in the newly registered user. When the cellular phone set 2 and the center server 5 are connected to each other by clicking the portion where the URL is displayed, therefore, the center server 5 can recognize that access from the particular newly registered user is made.

A Web page including a message to transmit the device ID (telephone number) of the cellular phone set 2 is transmitted from the center server 5 to the cellular phone set 2. The device ID (telephone number) is transmitted from the cellular phone set 2 to the center server 5 by the user of the cellular phone set 2 operating the operation switch 24 (step 68). The center server 5 stores the received device ID (telephone number) in the center server database 55 (step 67: see Fig. 4).

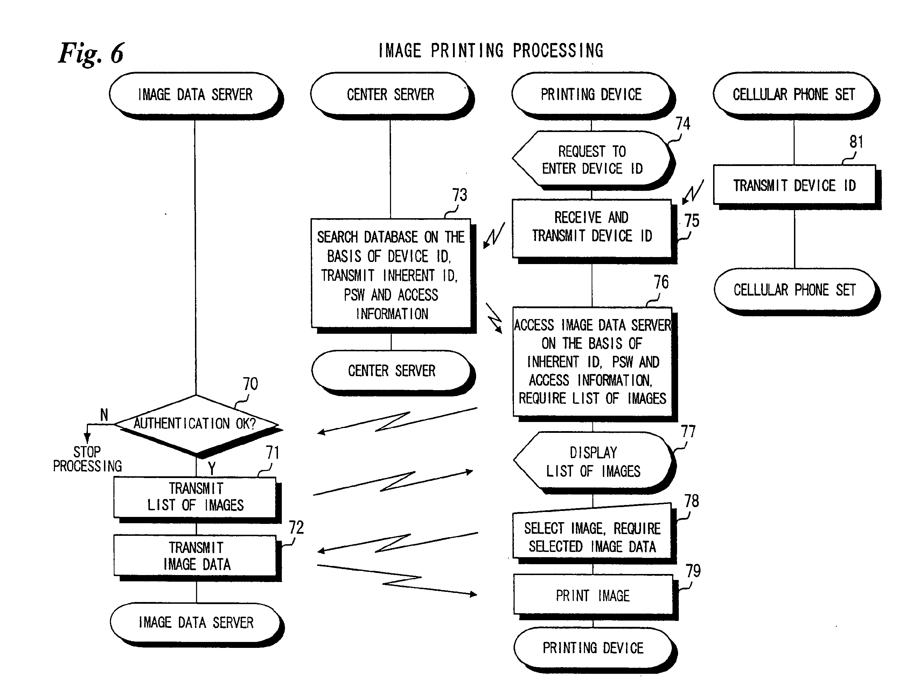

Fig. 6 is a flow chart showing the flow of processing in a case where the user prints an image using the printing system after the above-mentioned registration processing is completed.

The user utilizes the printing system on the premise that one or a plurality of image files each having image data recorded thereon are previously stored in the hard disk of the image data server 4, and the image files are associated with the transmittable folder provided in the image data server 4.

The user stops at the shop where the printing device 3 is installed with the cellular phone set 2.

The user enters a request to print an image represented by the image file stored in the hard disk of the image data server 4 into the printing device 3. Consequently, a request to enter a device ID is displayed on the display screen of the printing device 3 (step 74).

The user uses the short-distance communication function of the cellular phone set 2, to transmit the device ID (telephone number) stored in the nonvolatile memory 33 in the cellular phone set 2 toward the printing device 3 (step 81). The printing device 3 transmits (transfers), when it receives the device ID from the cellular phone set 2, the received device ID to the center server 5 through the Internet 1 (step 75).

The center server database 55 in the center server 5 respectively stores an inherent ID, a password, and image data server access information in correspondence with the device ID, as described above. The center server 5 searches the center server database 55 for the inherent ID, the password, and the image data server access information which correspond to the received device ID. The inherent ID, the password (PSW), and the image data server access information which are extracted by the search are transmitted to the printing device 3 (step 73).

The printing device 3 accesses, when it receives the inherent ID, the password, and the image data server access information from the center server 5, the image data sever 4 on the basis of the received image data server access information (step 76).

When the access made by the printing device 3 is accepted in the image data server 4, authentication processing (login processing) is performed in the image data server 4 (step 70). In the authentication processing, the inherent ID and the password are used. That is, the inherent ID and the password are transmitted from the printing device 3 to the image data server 4. In the image data server 4, the inherent ID and the password which are stored in the hard disk are respectively compared with the inherent ID and the password which are received from the printing device 3. When the inherent IDs and the passwords respectively coincide with each other, login by the printing device 3 is recognized (YES in step 70). When either (or neither) of the inherent IDs and the passwords coincide with each other, the image data server 4 rejects login (NO in step 70).

When the login is recognized, the transmittable folder provided in the image data server 4 is accessed in accordance with the path to the transmittable folder included in the image data server access information. The file names of the image files (a list of images) associated with the transmittable folder are transmitted from the image data server 4 to the printing device 3 (step 71).

The list of images is displayed on the display screen of the display device 43 in the printing device 3 (step 77).

The user uses the operation switch 44 in the printing device 3, to select the image file representing the image whose prints are desired in the list of images displayed on the display screen of the display device 43 in the printing device 3. The name of the image file representing the selected image is transmitted from the printing device 3 to the image data server 4 (step 78).

The image data server 4 reads out, when it receives an image data request from the printing device 3, the required image file from the hard disk, and transmits the read image file to the printing device 3 (step 72). In the printing device 3 which has received the image file, the image based on the received image file is outputted from the printer 52 (step 79).

As described in the foregoing, in the printing system according to the present embodiment, the user need not previously transmit data representing the image whose prints are desired to a computer for printing, and the image file representing the image may be stored in the image data server 4 (a computer owned by the user himself or herself). The user allows peer-to-peer communication between the printing device 3 and the image data server 4 only by stopping at the shop where the printing device 3 is installed with the cellular phone set 2, and can receive the desired prints of the image. Since the printing device 3 installed in the shop is generally provided with the high-accuracy or high-precision printer 52, the user can obtain highly precise prints of the image.

Although in the above-mentioned embodiment, the file name of the image file is transmitted from the image data server 4 to the printing device 3, and the list of images based on the file names (a list of image file names) is displayed on the display screen of the printing device 3, data representing a thumbnail image which is a reduced-size image of the image represented by the image file, together with the image file, may be previously stored in association with the transmittable folder in the hard disk of the image data server 4, and the data representing the thumbnail image may be transmitted from the image data server 4 to the printing device 3 in place of or in addition to the list of images based on the file names. A list of thumbnail images of images which can be printed can be displayed on the display screen of the display device 43 in the printing device 3.

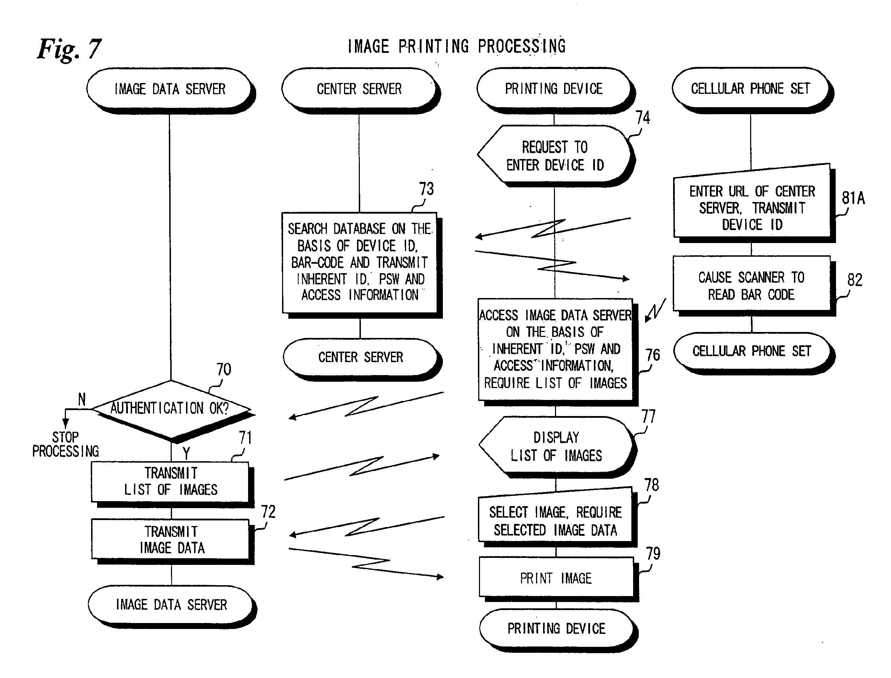

Fig. 7 is a flow chart showing another example of the image printing processing (Fig. 6). The same processing steps as the processing steps shown in Fig. 6 are assigned the same reference numerals and hence, the overlapped description is avoided. The printing device 3 used for the image printing processing shown in Fig. 7 shall comprise a bar code scanner.

After a request to enter a device ID is displayed on the display screen of the display device 43 in the printing device 3, the user operates the cellular phone set 2 to enter the URL of the center server 5 to access the center server 5. The user uses the cellular phone set 2, to transmit the device ID to the center server 5 (step 81A).

In the center server 5, an inherent ID, a password, and image data server access information which correspond to the received device ID are read out of the image data server database 55, and the inherent ID, the password, the image data server access information which are read out are bar-coded and are transmitted to the cellular phone set 2 (step 73A). Processing for bar-coding the inherent ID, the password, and the image data server access information may be performed, by storing a program for bar-coding processing in the hard disk of the center server 5, on the basis of the program.

A bar code is displayed on the display screen of the liquid crystal display 26 in the cellular phone set 2. The user causes the bar code scanner in the printing device 3 to read the bar code displayed on the display screen (step 82).

The printing device 3 restores the inherent ID, the password, and the image data server access information from the read bar code. Processing for restoring the inherent ID, the password, and the image data server access information from the bar code may be performed, by previously storing a program for restoration in the nonvolatile memory 50 or the like in the printing device 3, on the basis of the program. Peer-to-peer communication is established between the printing device 3 and the image data server 4, as described above, on the basis of the inherent ID, the password, and the image data server access information which are thus obtained, and the image selected by the user is printed.

Although the present invention has been described and illustrated in detail, it is clearly understood that the same is by way of illustration and example only and is not to be taken by way of limitation, the spirit and scope of the present invention being limited only by the terms of the appended claims.

## Claims

1. In a printing system comprising an image data server, owned by a user, comprising an image data storage device for storing image data, a center server comprising an access information storage device for storing access information to the image data server, a printing device capable of communicating with the image data server and the center server, and a portable terminal, owned by the user, capable of communicating with the printing device and the center server, wherein
the access information storage device in said center server stores the access information to said image data server in correspondence with a portable terminal ID for identifying said portable terminal,
said center server comprises
an access information transmission device for reading out the access information to the image data server corresponding to the given portable terminal ID from the access information storage device, and transmitting the read access information to said printing device,
said printing device comprises
a download request transmission device for accessing the image data server on the basis of the access information transmitted from said access information transmission device in said center server, and transmitting to the image data server a request to download the image data stored in the image data storage device in said image data server,
said image data server comprises
an image data transmission device for reading out the image data from the image data storage device on the basis of the download request transmitted from said download request transmission device in said printing device, and transmitting the read image data to the printing device, and
said printing device further comprises
a printer for printing an image represented by the image data transmitted from said image data transmission device in said image data server.

2. A printing device that can be connected to each of an image data server, owned by a user, comprising an image data storage device for storing image data, a portable terminal, owned by the user, comprising a storage device for storing portable terminal ID for identifying the portable terminal, and a center server comprising an access information storage device for storing access information to the image data server and the portable terminal ID in correspondence with each other, comprising:
an access information receiving device for receiving the access information, corresponding to the portable terminal ID stored in the storage device in said portable terminal, transmitted from said center server;
a download request transmission device for accessing the image data server on the basis of the access information received by the access information receiving device and transmitting to the image data server a request to download the image data stored in the image data storage device in said image data server; and
a printer for printing an image represented by the image data transmitted from said image data server on the basis of the download request.

3. The printing device according to claim 2, further comprising
a short-distance receiving device for receiving the portable terminal ID transmitted from the portable terminal by short-distance communication, and
a portable terminal ID transmission device for transmitting to said center server the portable terminal ID received by the short-distance receiving device.

4. The printing device according to claim 2, wherein
said access information receiving device receives from said portable terminal the access information transmitted from said center server to said portable terminal.

5. The printing device according to claim 4, wherein
the access information transmitted from said center server to said portable terminal is bar-coded access information, further comprising
a bar code reading device for reading the bar-coded access information.

6. A method of controlling a printing device that can be connected to each of an image data server comprising an image data storage device for storing image data, a portable terminal comprising a storage device for storing portable terminal ID for identifying the portable terminal, and a center server comprising an access information storage device for storing access information to the image data server and the portable terminal ID in correspondence with each other, comprising the steps of:
receiving the access information, corresponding to the portable terminal ID stored in the storage device in said portable terminal, transmitted from said center server,
accessing the image data server on the basis of the received access information and transmitting to the image data server a request to download the image data stored in the image data storage device in said image data server, and
printing an image represented by the image data transmitted from said image data server on the basis of the download request.
